# EUROPÄISCHE PATENTSCHRIFT

(11) **EP 0 303 039 B1**
(45) Veröffentlichungstag und Bekanntmachung des Hinweises auf die Patenterteilung: **05.01.1994**
(21) Anmeldenummer: 88110448.3
(22) Anmeldetag: 30.06.1988
(51) Int. Cl.: C08B 31/12

(54) **Verfahren zur Trockenkationisierung von Stärke II**
Process for the dry cationization of starch
Procédé pour la cationisation à sec d'amidon

(30) Priorität: 08.08.1987 DE 3726427
(43) Veröffentlichungstag der Anmeldung: 15.02.1989
(73) Patentinhaber: Degussa Aktiengesellschaft, 60311 Frankfurt (DE)
(72) Erfinder: Stober, Reinhard, Dr., D-6467 Hasselroth 2 (DE); Fischer, Wolfgang, D-8756 Kahl (DE); Huss, Michael, D-6236 Eschborn (DE); Pieter, Reimund, Dr., D-6330 Wetzlar (DE)

(56) Entgegenhaltungen:
- EP-A- 0 233 336
- BE-A- 520 540
- DE-A- 2 900 073
- US-A- 3 479 220
- CHEMICAL ABSTRACTS, vol. 93, no. 6, August 1980, Seite 129, Zusammenfassung Nr. 48956p, Columbus, Ohio, US; & JP-A-80 34 207 (DASUKIN FRANCHISE CO., LTD) 10-03-1980

## Beschreibung

Die Erfindung betrifft ein Trockenverfahren zur Herstellung von kationischen Stärkeäthern durch Umsetzung von Stärke mit Alkylenepoxiden in Gegenwart von Wasser in alkalischem Medium.

Es ist bekannt, Stärke oder Stärke enthaltende Substanzen in sogenannten Trockenverfahren mit kationischen Verätherungsmitteln umzusetzen. Bei diesen Verfahren führt man die Reaktion nicht in einer wässrigen Suspension, sonde rn mit einer oberflächlich als trocken erscheinenden Stärke durch.
Gemäß US-PS 4 127 563 setzt man für die Kationisierung Alkylenhalohydrine bei einem pH-Wert von ≦ 9 und einer Temperatur von 25 bis 60 °C ein.

Die Umsetzung eines Halohydrins mit Stärke in alkalischem Medium, aber bei einer Temperatur, die wenigstens 30 °C unter der Gelier-Temperatur der Stärke liegt, wird in der US-PS 3 3 46 563 beansprucht.

Aus der EP-PS 31 477 ist ebenfalls ein Verfahren zur Umsetzung von Stärke mit Alkylenepoxiden bekannt, die in Gegenwart von Wasser, Calciumhydroxid oder Calciumoxid bei Temperaturen von 50 bis 120 °C durchgeführt wird.

Der DE-OS 29 35 338 kann man ein Verfahren zur Kationisierung von Stärke entnehmen, bei dem der Alkaliüberschuß jedoch neutralisiert werden muß.

Gemäß US-PS 4 281 109 empfiehlt es sich, das Verätherungsreagenz und das Alkali- oder Erdalkalihydroxid vorzumischen und erst dann mit der Stärke zu vermengen.

Durch dieses Vorgehen soll eine gleichmäßigere und schnellere Durchmischung der Reagentien erreicht werden, so daß z. B. lokale Alkalianreicherungen nicht auftreten, die zum Quellen der Stärke führen können.

Allen aufgeführten Verfahren ist gemeinsam, daß bis zum Abschluß der Verätherungsreaktion das Reaktionsgemisch ständig gemischt werden muß.

Mit abnehmender Temperatur nimmt die Reaktionsdauer zu. Entsprechend lange sind Reaktionsbehälter blockiert und ist Rührenergie aufzuwenden.

Zusätzlich muß man Ausbeuteverluste hinnehmen. Aufgabe der Erfindung ist ein Verfahren zur Herstellung von kationischen Stärkeäthern, bei dem trotz niedriger Reaktionstemperaturen gleichzeitig nur sehr wenig Rührenergie aufzuwenden ist, Reaktionsgefäße nur kurzzeitig blockiert und sehr gute Ausbeuten erzielt werden, sowie ein Absieben nicht nötig ist.

Chemical Abstracts, vol 93, no.6, August 1980, Seite 129, Nr. 48956p beschreibt ein Verfahren zur Herstellung von Carboxymethylstärke durch Umsetzung von Stärke mit Silikaten in Wasser.

Die Zwischenliteratur EP-A-0 233 336 beschreibt ein Trockenverfahren zur Herstellung von kationischen Stärkeäthern durch Umsetzung von Stärke mit Alkylidenepoxiden in gegenwart von Wasser in alkalischen Medium und in gegenwart einer feinteiligen kieselsäure.

BE-A-520 540 beschreibt ein Verfahren zu Herstellung von Stärkeäther durch Umsetzung von Stärke mit Alkylenoxiden.

Verfahren zur Herstellung verätherter Stärken durch Umsetzung von Stärke mit Alkylenepoxiden der allgemeinen Formeln 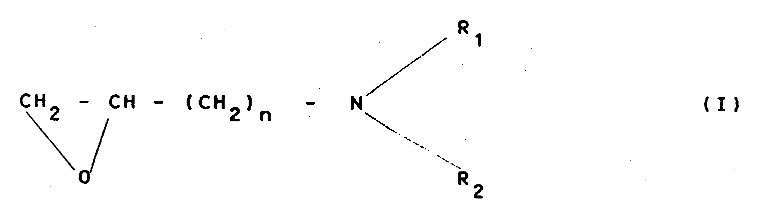
oder 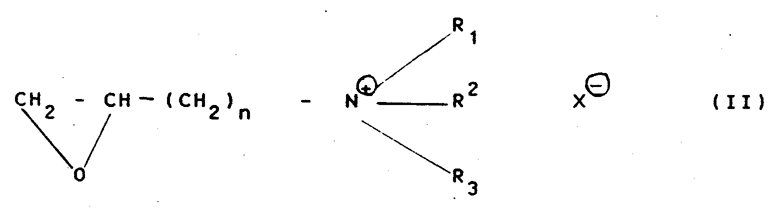
in denen n = 1, 2 oder 3 bedeutet, R¹,R² und R³ gleiche oder verschiedene Alkylreste mit 1 bis 4 Kohlenstoffatomen oder R¹ den Benzylrest darstellen, und X⁻ Chlorid, Bromid, Sulfat oder Acetat, in alkalischem Medium in Gegenwart von 10 bis 35 Gew.-% WAsser, bezogen auf die Stärke (atro), und 0,01 bis 2,0 Gew.-% einer feinteiligen hydrophilen Kieselsäure (bezogen auf die Gesamtmenge der Mischung) mit einer spezifischen Oberfläche zwischen 60 und 700 m²/g (BET-MESSUNG nach Din 66131) dadurch gekennzeichnet, daß man die Umsetzung in Gegenwart von Alkalisilikaten und/oder -aluminaten oder eines Gemisches aus Alkali- oder Erdalkalihydroxiden bzw. -oxiden und Alkalicarbonaten oder eines Gemisches einer oder mehrerer dieser Hydroxide, Oxide oder Carbonate mit einem Alkalisilikat und/oder -aluminat durchführt, in einer Menge, die so beschaffen ist, daß der pH-Wert der verätherten Stärke bei >9 (1 Gew.-% Suspension) liegt.

Erfindungsgemäß geht man dabei so vor, daß man die Mischung aus Stärke, alkalisch wirkenden Substanzen gemäß Anspruch 1, Kieselsäure und Alkylenepoxid, das im allgemeinen als wässrige Lösung eingesetzt wird, in einem Intensivmischer innerhalb von 10 Sekunden bis 25 Minuten, bevorzugt 20 Sekunden bis 5 Minuten homogensisiert, dann auschleust und in dem vorgesehenen Lagerbehältnis wie z. B. einem Silo oder auch in den für den Versand vorgesehenen Verpackungen die Kationisierungsreaktion bis zum Ende ablaufen läßt.

Weitere Mischenergien müssen dann nicht mehr für weitere Verfahrensschritte aufgewendet werden.

Zusätzlich erweist es sich als vorteilhaft, daß man bevorzugt in einem Temperaturbereich arbeitet, in dem sich in Abhängigkeit von z. B. jahreszeitlich bedingten Schwankungen der Umgebungstemperatur die Raumtemperatur von anspruchslosen Warenlagern bewegt, d. h. von 18 bis 30 °C, insbesondere 20 bis 25 °C.

Versuche zeigen, daß das eingesetzte Epoxid vollständig abreagiert. Bei einer Temperatur von 20 °C sind nach 7 Tagen nur noch Spuren von <10 ppm Epoxid/kg Stärke festzustellen.

Nach dem erfindungsgemäßen Verfahren hergestellte Stärken besitzen keinen Grobanteil und können ohne Nachbehandlung (Absieben) eingesetzt werden.

Als Intensivmischer geeignet sind z. B. Pflugscharmischer (kontinuerlich und diskontinuierlich), Befeuchtungs-Durchflußmischer (kontinuierlich).

Zur Herstellung kationischer Stärkeäther nach dem erfindungsgemäßen Verfahren können native oder modifizierte Stärke oder Stärke enthaltende Substanzen beliebiger Herkunft eingesetzt werden. Mit besonderem Vorteil wird native Weizen-, Mais-, Tapioca- oder Kartoffelstärke verwendet.

Erfindungsgemäß erfolgt die Verätherung der Stärke mit Alkylenepoxiden der allgemeinen Formel 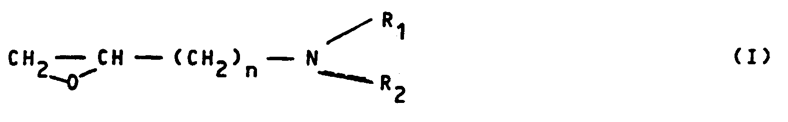
oder vorzugsweise 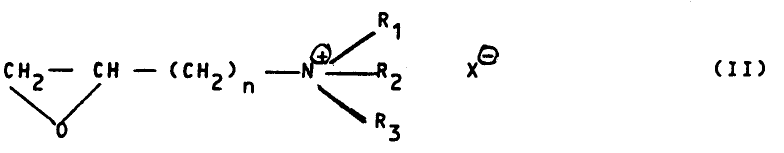
in der n eine Zahl von 1, 2 oder 3 ist, R₁, R₂ und R₃ gleiche oder verschiedene Alkylreste mit 1 bis 4 Kohlenstoffatomen oder R₁ den Benzylrest darstellt und X^{⊖} Chlorid, Bromid, Sulfat oder Acetat bedeuten, insbesondere aber Chlorid.

Man setzt je Mol Stärke, berechnet als Anhydroglukoseeinheit in der Trockensubstanz, 0,005 bis 0,500 Mol Epoxid gemäß den Formeln (I) oder (II), vorzugsweise 0,01 bis 0,25 Mol Epoxid ein. Daraus resultiert ein substitutionsgrad (DS) von 0,005 bis 0,300, bevorzugt von 0,01 bis 0,20.

Erfindungsgemäß wird die Verätherung der Stärke mit den Alkylenepoxiden in einem Medium vorgenommen, das 10 bis 35 Gew.-%, insbesondere 20 bis 25 Gew.-%, Wasser und 0,2 bis 4,0 Gew.-%, insbesondere 0,4 bis 3,0 Gew.-% eines Alkalisilikatsund/oder -aluminats enthält. Verwendbar sind auch Gemische aus Alkali- oder Erdalkalihydroxiden bzw. - oxiden und Alkalicarbonaten.

Geeignet sind ebenso Gemische aus einem oder mehreren dieser Oxide, Hydroxide oder Carbonate mit einem Alkalisilikat und/oder -aluminat.

Alkali bedeutet insbesonde Natrium oder Kalium, Erdalkali insbesondere Calcium. Als Silikat wird besonders Natriummetasilikat verwendet.
Neben diesen Komponenten müssen 0,01 bis 2,0 Gew.-%, bevorzugt 0,1 bis 1,0 Gew.-%, einer feinteiligen hydrophilen Kieselsäure in dem Reaktionsgemisch vorhanden sein, bezogen auf dessen Gesamtmenge.

Dabei kann es sich um gefällte oder durch Flammenhydrolyse erzeugte Kieselsäuren handeln.

Die spezifischen Oberflächen liegen zwischen 60 und 700 m²/g, bevorzugt 100 und 450 m²/g (BET-Messung nach DIN 66 131, N₂-Adsorption bei der Temperatur des flüssigen Stickstoffs, vorheriges Ausheizen der Probe bei 110 °C).

Bevorzugt eingesetzt werden hydrophile gefällte Kieselsäuren mit einer spezifischen Oberfläche von 190 bis 450 m²/g, insbesondere eine sprühgetrocknete gefällte Kieseläure mit einer spezifischen Oberfläche von 190 m²/g (BET-Messung).

Man setzt vorzugsweise ein pulverförmiges Gemisch aus Kieselsäure und den alkalisch wirkenden Substanzen, insbesondere Alkalisilikat und/oder Alkalialuminat ein (im folgenden Text Aktivator genannt).

Der Aktivator enthält 2 bis 50 Gew.-%, bevorzugt 10 bis 40 Gew.-%, Kieselsäure. Die Differenz zu 100 % wird durch die alkalisch wirkenden Substanzen gemäß Anspruch 1 aufgefüllt.

Dabei ist zu berücksichtigen, daß der Aktivator als Pulver vorliegen muß und jeweils die Menge an Aktivator eingesetzt wird, die zu einem Endprodukt mit einem pH-Wert von > 9 (1 Gew.%ige Stärkesuspension), insbesondere 10 - 11,2, führt.

Die Reihenfolge bei der Vermischung der Reagentien ist im allgemeinen nicht als kritisch anzusehen.

Als vorteilhaft hat sich jedoch herausgestellt, (Chargenmischer) zuerst Stärke und Aktivator miteinander bis zu 10 Minuten zu mischen und anschließend das Epoxid in Form einer wässrigen Lösung aufzusprühen.

Das bei der Herstellung des Epoxids durch Umsetzung des entsprechenden Halogenhydrins mit alkalisch wirkenden Substanzen, wie z. B. Alkalihydroxid, anfallende Gemisch kann unmittelbar verwendet werden, wenn das dabei entstehende Alkalihalogenid im Endprodukt nicht stört (Korrosionsgefahr). Dieses wird weder gewaschen noch neutralisiert und kann direkt eingesetzt werden.

Es kann natürlich auch die nach dem Stand der Technik übliche Neutralisation und ein Auswaschen des alkalisch wirkenden Anteils in der kationisierten Stärke erfolgen, wenn dies unter Berücksichtigung des Einsatzzweckes der Stärke sinnvoll zu sein scheint.
Mit Hilfe des erfindungsgemäßen Verfahrens kann man auch hochsubstituierte kaltwasserlösliche Stärken mit einem Substitutionsgrad von 0,08 bis 0,30 herstellen.

Arbeitet man bei der vorhandenen Raum- bzw. Umgebungstemperatur, benötigt man weder für die Mischvorrichtung noch für die sich anschließende Abreaktion eine Temperaturregelung und erhält trotzdem die gewünschten Produkte mit hohen Ausbeuten.

Es sind dann sogar zusätzliche Reaktionsbehälter überflüssig, da das Reaktionsgemisch nach der intensiven Durchmischung z. B. in die für den Versand vorgesehenen Verpackungen oder in ein Lagersilo abgefüllt werden kann und dort abreagiert.

Die geringe Verweilzeit im Mischaggregat ermöglicht gleichzeitig die kontinuierliche Durchführung der Trockenkationisierung, während nach dem Stand der Technik aufgrund der langen Mischzeiten nur die absatzweise Kationisierung von Stärke bekannt und sinnvoll war.

Die erfindungsgemäß herstellbaren kationisierten Stärken eignen sich zur Anwendung z. B. als Retentionshilfsmittel, als Zusatzmittel zur Masse bei der Papierherstellung zur Verbesserung der Papierfestigkeit, an der Leimpresse bei der Papierherstellung, als Verdickungsmittel, als Flockungsmittel für die Abwasserbehandlung und bei der Herstellung von Gips.

Die nachfolgenden Beispiele illustrieren den Gegenstand der Erfindung.

Es werden folgende Aktivator-Typen für die Kationisierung von Stärken durch intensives Vermischen hergestellt:
Die Zusammensetzung des Metasilikats lautet:
48,0 ± 1.0 % SiO₂, 51.0 ± 1.0 % Na₂O
(Henkel KGaA, "Natriummetasilikat wasserfrei")
die des Aluminats:
52 - 55 % Al₂O₃, 37 - 39 % Na₂O
(Dynamit Nobel AG, "Natriumaluminat 'Dynyflock'")

**Tabelle 1**

| Aktivatorgemische | |
|---|---|
| Type | Zusammensetzung (Gew.-%) |
| PC # 1 | 76,85 % Natriummetasilikat |
| | 23,15 % KS (sprühgetrocknete Kieselsäure 190 m²/g) |
| PC # 2 | 44,90 % Natriummetasilikat |
| | 27,78 % Calciumhydroxid |
| | 27,32 % KS |
| PC # 3 | 48,81 % Calciumhydroxid |
| | 34,13 % Natriumcarbonat |
| | 17,96 % KS |
| PC # 4 | 79,25 % Natriumaluminat |
| | 20,75 % KS |
| PC # 5 | 38,31 % Natriummetasilikat |
| | 43,60 % Natriumaluminat |
| | 18,90 % KS |
| PC # 6 | 51,45 % Natriumaluminat |
| | 27,20 % Calciumhydroxid |
| | 21,35 % KS |
| PC # 7 | 63,00 % Natriummetasilikat |
| | 37,00 % KS |

### Beispiele

### Allgemein gültige Angaben:

Es wurden jeweils 1000 g (5.230 Mol) native Kartoffelstärke (Feuchtegehalt 15,2 % Gehalt an unlöslichem Stickstoff 0,010 %) 5 Minuten lang intensiv mit dem angegebenen Aktivator vermischt (Pflugscharmischer) und die Reagenzlösung, welche jeweils 25,38 g (entsprechend einem theoretischen DS von 0,032) 2,3-Epoxypropyltrimethylammoniumchlorid enthielt, bei laufendem Mischer innerhalb von 1 Minute zugetropft. (Nr. 7: Die Reagenzlösung enthielt 158,61 g Reagenz, entsprechend einem theoretischen DS von 0,200)
Nach weiteren 15 Minuten Mischdauer wurde das Reaktionsgut in Polyethylensäcken verpackt und nach 2 Tagen Lagerzeit analysiert.

Abmischung und Lagerung erfolgten bei (20 °C).

Die Ausbeute bzw. der Substitutionsgrad (DS) wurden durch Stickstoffbestimmung nach Kjeldahl am ausgewaschenen Produkt bestimmt.

Waschlösung: iso-Propanol/Wasser (60:40 Gew.-%).

**Tabelle 2**

| Nr. | Aktivator | | Reagenzlösung | | Ausbeute |
|---|---|---|---|---|---|
| | Typ | Menge | Menge | prakt. DS | |
| 1 | PC # 1 | 18,32 g | 158,84 g | 0,0275 | 85,9 % |
| 2 | PC # 2 | 15,52 g | 157,96 g | 0,0283 | 88,4 % |
| 3 | PC # 3 | 24,85 g | 160,90 g | 0,0214 | 66,9 % |
| 4 | PC # 4 | 20,44 g | 159,51 g | 0,0279 | 87,2 % |
| 5 | PC # 5 | 20,35 g | 158,90 g | 0,0288 | 90.0 % |
| 6 | PC # 6 | 17,47 g | 158.02 g | 0,0279 | 87,2 % |
| 7 | PC # 7 | 34,42 g | 374,47 g | 0,1630 | 81,5 % |

### Viskositäten nach Brabender

- (Literatur:: W.C. Shneg, K.H. Tipples: the Amylograph Handbook
The American Association of Cereal Chemists,
St. Paul 1980,
ISBN: 0-913250-15-5

Die Viskogramme wurden 1 Woche nach Abmischung aufgenommen.

| | |
|---|---|
| Gerät: | Brabender Viskograph E |
| Kleisterkonzentration: | 5,0 Gew.-% |
| Anfangstemperatur: | 25°C |
| Heizrate: | 3 grd/min. |
| 1. Haltetemperatur: | 95°C |
| 1.Haltezeit: | 30 min. |
| Kühlrate: | 3 grd/min. |
| 1. Haltetemperatur: | 50°C |
| 2.Haltezeit: | 30 min. |

**Tabelle 3**

| (Werte in Brabender-Einheiten) | | | |
|---|---|---|---|
| Nr. | Peak | 95°C 30 min. | 50°C 30 min. |
| 1 | 865 | 312 | 430 |
| 2 | 675 | 220 | 305 |
| 3 | 669 | 185 | 252 |
| 4 | 830 | 270 | 359 |
| 5 | 860 | 321 | 408 |
| 6 | 779 | 188 | 240 |
| 7 | kaltwasserlöslich | | |

## Patentansprüche

1. Verfahren zur Herstellung verätherter Stärken durch Umsetzung von Stärke mit Alkylenepoxiden der allgemeinen Formeln 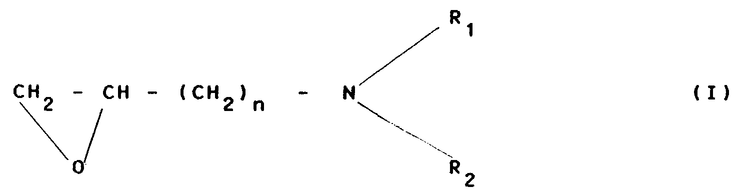 oder 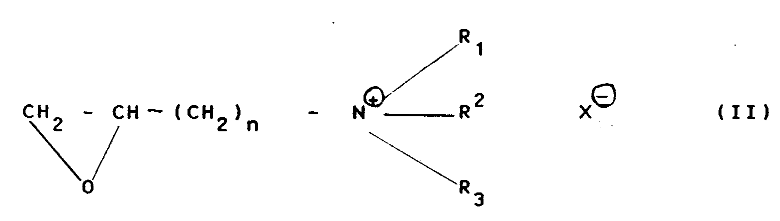 in denen n = 1, 2 oder 3 bedeutet, R¹,R² und R³ gleiche oder verschiedene Alkylreste mit 1 bis 4 Kohlenstoffatomen oder R¹ den Benzylrest darstellen, und X⁻ Chlorid, Bromid, Sulfat oder Acetat, in alkalischem Medium in Gegenwart von 10 bis 35 Gew.-% Wasser, bezogen auf die Stärke (atro), und 0,01 bis 2,0 Gew.-% einer feinteiligen hydrophilen Kieselsäure (bezogen auf die Gesamtmenge der Mischung) mit einer spezifischen Oberfläche zwischen 60 und 700 m²/g (BET-MESSUNG nach Din 66131)
dadurch gekennzeichnet, daß man die Umsetzung in Gegenwart von Alkalisilikaten und/oder -aluminaten oder eines Gemisches aus Alkali- oder Erdalkalihydroxiden bzw. -oxiden und Alkalicarbonaten oder eines Gemisches einer oder mehrerer dieser Hydroxide, Oxide oder Carbonate mit einem Alkalisilikat und/oder -aluminat durchführt, in einer Menge, die so beschaffen ist, daß der pH-Wert der verätherten Stärke bei >9 <1 Gew.-% Suspension) liegt.

2. Verfahren gemäß Anspruch 1,
dadurch gekennzeichnet, daß man ein pulverförmiges Gemisch aus der Kieselsäure und den alkalisch wirkenden Verbindungen einsetzt.

3. Verfahren gemäß den Ansprüchen 1 und 2,
dadurch gekennzeichnet, daß man das die Stärke enthaltende Reaktionsgemisch in einem Intensivmischer innerhalb von 10 Sekunden bis 25 Minuten homogenisiert, dann ausschleust und in dem vorgesehenen Lagerbehältnis ausreagieren läßt.

## Claims

1. Process for the preparation of etherified starches by reaction of starch with alkylene epoxides of the general formula 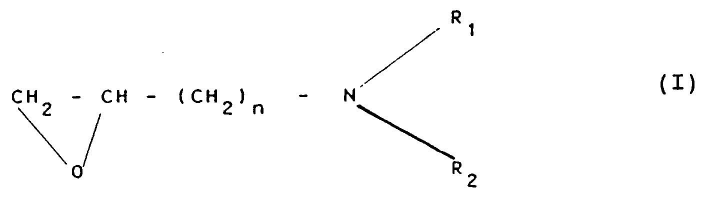 or 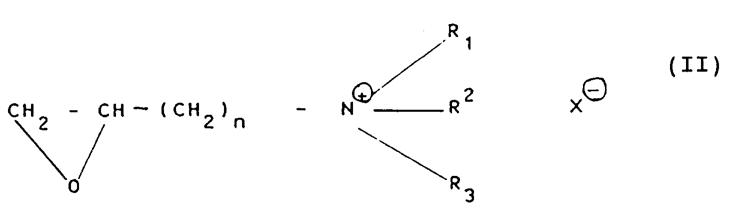 in which n = 1, 2 or 3, R¹, R² and R³ are identical or different alkyl radicals having 1 to 4 carbon atoms or R¹ represents the benzyl radical, and X^{⊖} denotes chloride, bromide, sulphate or acetate, in an alkaline medium in the presence of from 10 to 35% by weight of water, based on the starch (atro) and 0.01 to 2.0% by weight of a finely divided hydrophilic silica (based on the total amount of the mixture) having a specific surface area of between 60 and 700 m²/g (BET measurement in accordance with DIN 66 131), characterized in that the reaction is carried out in the presence of alkali metal silicates and/or aluminates or in the presence of a mixture of alkali metal or alkaline earth metal hydroxides or oxides and alkali metal carbonates or in the presence of a mixture of one or more of these hydroxides, oxides or carbonates with an alkali metal silicate, and/or aluminate, in an amount such that the pH of the etherified starch is > 9 (1% strength by weight suspension).

2. Process according to Claim 1, characterized in that a pulverulent mixture of the silica and the alkaline substances is used.

3. Process according to Claims 1 and 2, characterized that the starch-containing reaction mixture is homogenized in an intensive mixer for from 10 seconds to 25 minutes and then discharged and the reaction is allowed to run to completion in the intended storage tank.

## Revendications

1. Procédé de fabrication d'amidons éthérifiés par réaction d'amidon avec des alkylènepoxydes de formule générale : 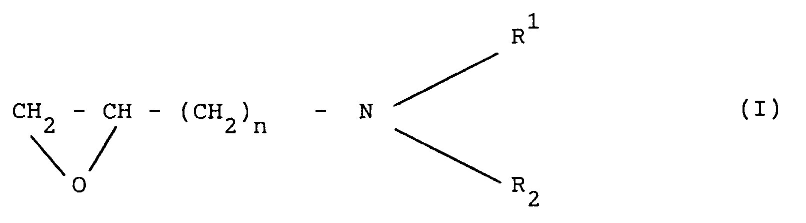 ou 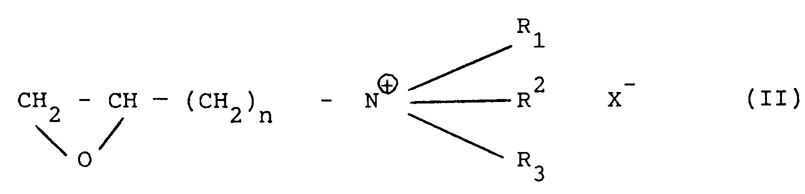 dans lesquelles
n = 1, 2 ou 3
R₁, R₂, R₃ sont des radicaux alkyle égaux ou différents avec de 1 à 4 atomes de carbone ou R₁ représente le radical benzyle et
X⁻ est un chlorure, bromure, sulfate ou acétate en milieu alcalin en présence de 10 à 35 % en poids d'eau, par rapport à l'amidon (absolument sec), et de 0,01 à 2,0 % en poids d'un acide silicique finement divisé hydrophile (par rapport au poids total du mélange) avec une surface spécifique entre 60 et 700 m²/g (mesure BET selon dyne 66131).
caractérisé
- en ce qu'on réalise la réaction en présence de silicates et/ou d'aluminates alcalins ou d'un mélange d'hydroxydes ou d'oxydes alcalins ou alcalinoterreux et de carbonates alcalins ou d'un mélange d'un ou plusieurs de ces hydroxydes, oxydes ou carbonates avec un silicate alcalin et/ou un aluminate alcalin, en une quantité, qui est pourvue, de façon que le pH de l'amidon éthérifié soit > 9 (suspension à 1 % en poids).

2. Procédé selon la revendication 1, caractérisé en ce qu'on met en oeuvre un mélange pulvérulent de l'acide silicique et des composés à action alcaline.

3. Procédé selon les revendication 1 et 2, caractérisé en ce qu'on homogénéise le mélange réactionnel contenant de l'amidon dans un mélangeur intensif pendant 10 secondes à 25 minutes, ensuite on écluse et on laisse terminer la réaction dans le récipient de stockage prévu.
